# EUROPEAN PATENT APPLICATION

(11) **EP 1 852 791 A1**
(43) Date of publication of application: **07.11.2007**
(21) Application number: 07101760.2
(22) Date of filing: 05.02.2007
(51) Int. Cl.: G06F 17/30

(54) **Providing user access to digital content data**

(30) Priority: 24.03.2006 US 388803
(71) Applicant: I-Sho Limited, London EC2Y 5AB (GB)
(72) Inventor: Hall, Stephen, London, NW3 4LD (GB); Thompson, Tim, London, SW1W 9HJ (GB)
(74) Representative: Derry, Paul Stefan

(57) **Abstract**

Providing user access to digital content data involves maintaining a database having contents comprising plural records, each associated with a channel. Each record relates to a different item of digital content, and comprises: a displayable icon; a record date; a channel identifier, and a resource locator. A current view is automatically selected by: detecting a time range in which records are required to be grouped; on the basis of that, selecting at least two adjacent time periods as display time periods, selecting as display channels at least two channels; and combining the display time periods and the display channels to provide a current view matrix. The database contents are presented by: displaying the current view matrix with plural cells; using the record date and the channel record to determine whether the record forms part of the current view matrix; and for each record that forms part of the current view matrix, displaying the displayable icon for the record in the appropriate cell. In response to the selection of a displayable icon by a user, the item of digital content is retrieved.

## Description

This invention relates to providing user access to digital content data.

It is common for people to use personal computers (PCs) at work and at home to store and to consume items of digital content. Such items of content can be user-generated or can be generated externally. User-generated content typically is digital photographs, videos, word processor-generated documents and the like. Externally-generated content typically is such as digital photographs and other images, videos, reports and other documents, webpages, audio files, etc.

Software for organizing content on a PC exists. For instance, Picassa is a free tool currently available for download from Google.com. Picassa will search a PC (or specified folders therein) and make copies of all image files and videos found. Picassa then presents this content through a graphical user interface (GUI) in folders. At a top folder level are a number of folders, each relating to a different year. Content is presented in folders at a second folder level. These folders have the same name as the folders in which Picassa found the content. In a main view, folders are listed in an area at the left side of the display, and thumbnails are in a larger area to the right. A thumbnail is a small image. For an item of content which is a still image, such as a digital photograph, the thumbnail typically is a lower resolution version of that image at a size of a few tens of pixels by a few tens of pixels. For a video, the thumbnail typically is a small image comprising the first frame of the video at a lower resolution. Thus, the thumbnail allows a user to determine quickly what an item of content is.

The thumbnails are grouped according to the folder in which they are found. If the number of items of content in a selected folder is such that the number of thumbnails to be displayed allows it, thumbnails from one or more following folders are displayed below. Thumbnails from different folders are demarked by a graphic which states the lower level folder name and the month in which the content was created or last updated (according to the details attached to the file at its original location).

Although Picassa and other similar software provide useful content organization and presentation, Picassa has limitations.

Businesses and organizations typically provide digital content to interested parties through a website comprising plural linked webpages. Webpages can have content embedded in them, and can also provide means for allowing content to be separated from the webpage and stored locally so that it can be accessed later. Embedded content can comprise digital still images, videos, audio clips, HTML text, Java or Flash content, portable document format (PDF) documents etc. Separable content can comprise videos, still images, audio files (MP3 etc.), PDF documents etc. Website operators sometimes charge a fee for content, or else provide certain content only to users whom have a currently valid subscription. Examples include video.google.com and Napster.com.

Although such is generally satisfactory, providing content through websites has limitations. It can also be quite a time-consuming, and thus expensive, task to keep a website up-to-date with all content that a company or organization wants to make publicly available.

As part of the WinFS project underway at Microsoft Corporation, an application called "Life Journal" is proposed to organize data from a 'soup' and organize with respect to a timeline. However, the inventors perceive problems with the proposed application, particularly since it would seem to require very substantial amounts of computing power to implement, and such is not available to the majority of home or business computer users. The inventors also have identified considerable limitations to the Life Journal application. Presently, the Life Journal is merely a proposal, which probably has not been implemented in a workable form and certainly has not been made publicly available.

A first aspect of the invention provides a method of providing user access to digital content data, said method comprising:
maintaining a database having contents comprising plural records,
   wherein each of said plural records is associated with at least one of a plurality of channels,
   wherein each of said plural records relates to a different item of digital content, and
   wherein each of said plural records comprises:
   a displayable icon;
   a record date;
   at least one channel identifier, each said channel identifier identifying one of said plural channels with which said record is associated; and
   a resource locator identifying a location at which said corresponding item of digital content is stored, at computer apparatus, automatically selecting a current view by:
      detecting a time period setting, said time period setting identifying a duration of a time range in which records are required to be grouped;
      on said basis of said time period setting, selecting at least two adjacent time periods as display time periods, said display time periods each having a duration equal to said duration identified by said time period setting;
      selecting as display channels at least two of said plural channels for which digital content is required to be displayed; and
      combining said display time periods and said display channels to provide a current view matrix,
      presenting said database contents by:
      displaying said current view matrix with plural cells, each of said plural cells comprising a different combination of display channel and display time period, said number of cells being equal to the product of said number of display time periods and said number of display channels;
      for each of plural ones of said records, using said record date and said channel identifier for said record to determine whether said record forms part of said current view matrix; and
      for each record that forms part of said current view matrix, displaying said displayable icon for said record in said cell that:
         a) relates to the one of said display channels that corresponds to said channel identifier associated with that record, and
         b) relates to the one of said display time periods that the record date for that record falls into, and
   in response to said selection of a displayable icon by a user, providing an item of digital content to the user by using said record associated with the selected displayable icon to determine the resource locator associated with the selected displayable icon and to retrieve said item of digital content.

This invention provides numerous advantages, particularly by providing a display of icons relating to content items in a manner which is convenient for a user and which can allow a user to find easily a content item that they are interested in and to browse content items even if not looking for a particular content item. This invention allows a user to determine quickly when content was generated and how much content was generated at what times. Furthermore, this is achieved and without requiring the user to read text attributes.

Preferably said displayable icon of at least one record is a thumbnail image.

Preferably the method comprises receiving plural records relating to a channel from an external source, and incorporating appropriate ones of those records in said current view matrix. This is particularly powerful since it allows channels to be shared between users. In the embodiments, the sharing can be between only specified users or a channel can be made generally available to all users.

Said external source may be a remote server.

The method may comprise notifying a user of at least one update to said channel from said external source. This allows channels to be updated, for instance with additional content items, yet allows users that have previously accessed that channel to be provided with an updated channel without needing manually to check for updates.

Preferably said resource locator of at least one of said records is a hyperlink.

The method may comprise conducting a search for content items meeting certain user-defined criteria to provide plural search results, wherein each result relates to a different content item; and creating a new channel having a new channel identifier and having associated therewith records corresponding to the search results. This provides a mechanism for creating a channel which is simple for a user to use yet which can include all content items meeting certain criteria, for instance relating to a particular subject as determined by keywords.

The method may comprise making a publication channel available to one or more other users by sending records associated with said publication channel to a remote server for publication thereby. This allows users to share channels. Channels may be shared with specified other users, or can be published for general access and consumption. Content items associated with shared channels may remain local, or may be sent to the or another remote server from where they can be accessed by other users.

A second aspect of the invention provides apparatus for providing user access to digital content data, said apparatus comprising:
a database having contents comprising plural records,
   wherein each of said plural records is associated with at least one of a plurality of channels,
   wherein each of said plural records relates to a different item of digital content, and
   wherein each of said plural records comprises:
   a displayable icon;
   a record date;
   at least one channel identifier, each said channel identifier identifying one of said plural channels with which said record is associated; and
   a resource locator identifying a location at which said corresponding item of digital content is stored,
   computer apparatus operable automatically to select a current view, the computer apparatus being:
      arranged to detect a time period setting, said time period setting identifying a duration of a time range in which records are required to be grouped;
      arranged to select at least two adjacent time periods as display time periods on said basis of said time period setting, said display time periods each having a duration equal to said duration identified by said time period setting;
      arranged to select as display channels at least two of said plural channels for which digital content is required to be displayed; and
      arranged to combine said display time periods and said display channels to provide a current view matrix,
      said computer apparatus being operable to present said database contents by being:
      arranged to display said current view matrix with plural cells, each of said plural cells comprising a different combination of display channel and display time period, said number of cells being equal to the product of said number of display time periods and said number of display channels;
      arranged, for each of plural ones of said records, to use said record date and said channel identifier for said record to determine whether said record forms part of said current view matrix; and
      arranged to display, for each record that forms part of said current view matrix, said displayable icon for said record in said cell that:
         a) relates to the one of said display channels that corresponds to said channel identifier associated with that record, and
         b) relates to the one of said display time periods that the record date for that record falls into, and
   said computer apparatus being arranged to respond to said selection of a displayable icon by a user by providing an item of digital content to the user by using said record associated with the selected displayable icon to determine the resource locator associated with the selected displayable icon and to retrieve said item of digital content.

Embodiments of the present invention will now be described, by way of example only, with reference to the accompanying drawings, of which:
Figure 1 illustrates a system in which the invention is embodied; and
Figure 2 is a schematic diagram illustrating areas of a screenshot provided by an i-Sho client program forming part of the Figure 1 system.

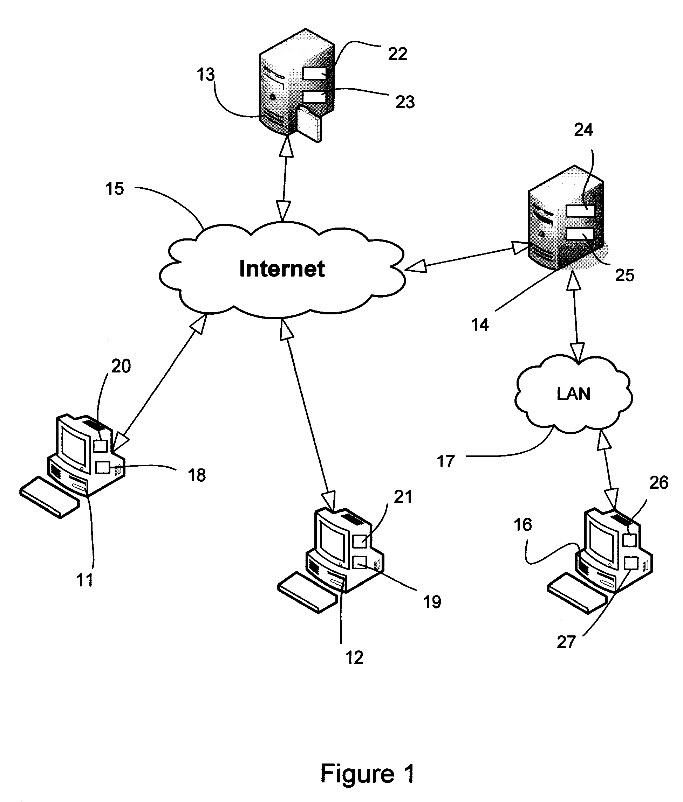

Figure 1 illustrates a system in which the invention is embodied. The system comprises generally first and second Personal Computers (PCs) 11, 12, a services server 13 and a content server 14 connected to a communications network in the form of the Internet 15. The content server 14 is connected to a third PC 16 via a local area network (LAN) 17. The term 'PC' will be understood to embrace Macs, IBM-type PCs and all other personal computing devices, including mobile computers such as Pockets PCs and other PDA-type devices.

The first and second PCs 11, 12 each are running a separate copy of an program according to the invention. For convenience, the program is referred to hereafter as an i-Sho client program. The i-Sho client program is stored in a memory 18 in the first PC 11. The i-Sho client program is stored in a memory 19 in the second PC 12. The first PC 11 also includes a processor 20, which coordinates with the memory 18 to run the i-Sho client program on the first PC 11. The second PC 11 also includes a processor 21, which coordinates with the memory 19 to run the i-Sho client program on the second PC 12. The i-Sho client program and the operation of the PCs 11, 12 when running the i-Sho client program is described in more detail below.

The services server 13 similarly includes a services server memory 22 and a processor 23. Stored in the services server memory 22 is a services server program, which runs on the services server 13 by cooperation between the processor 23 and the services server memory 22 according to the instructions forming the services server program. The content server memory 22 is capable of storing plural items of content, as is described in detail below. The services server memory 22 may be made of a number of different components. For instance, the services server memory 22 may comprise ROM, RAM and Hard Disc (HD) storage, tape storage and/or optical storage.

The content server 14 similarly includes a content server memory 24 and a content server processor 25. Stored in the content server memory 24 is a content server program, which runs on the content server 14 by cooperation between the content server processor 25 and the content server memory 24 according to the instructions forming the content server program. The content server memory 24 also stores plural items of content, as is described in detail below. The content server memory 24 may be made of a number of different components. For instance, the content server memory 24 may comprise ROM, RAM and Hard Disc (HD) storage, tape storage and/or optical storage.

The third PC 16 similarly includes a third PC memory 26 and a third PC processor 27. Stored in the third PC memory 26 is an i-Sho channel production program, which runs on the third PC 16 by cooperation between the third PC processor 27 and the third PC memory 26 according to the instructions forming the i-Sho channel production program.

The i-Sho client program serves as an organizer for files stored in the first and second PCs 11, 12. The i-Sho client program allows a user to associate items of content with channels, and allows the user to browse content in those channels with displayable icons related to the items being presented in a sequence of fields according to the time of creation of the content items. Items of content are accessed by a user through the selection of the appropriate displayable icon. Briefly, through a single interface, the i-Sho client program acts as an integrated environment that eliminates the need for plural applications to store, retrieve, collaborate, network and sell content.

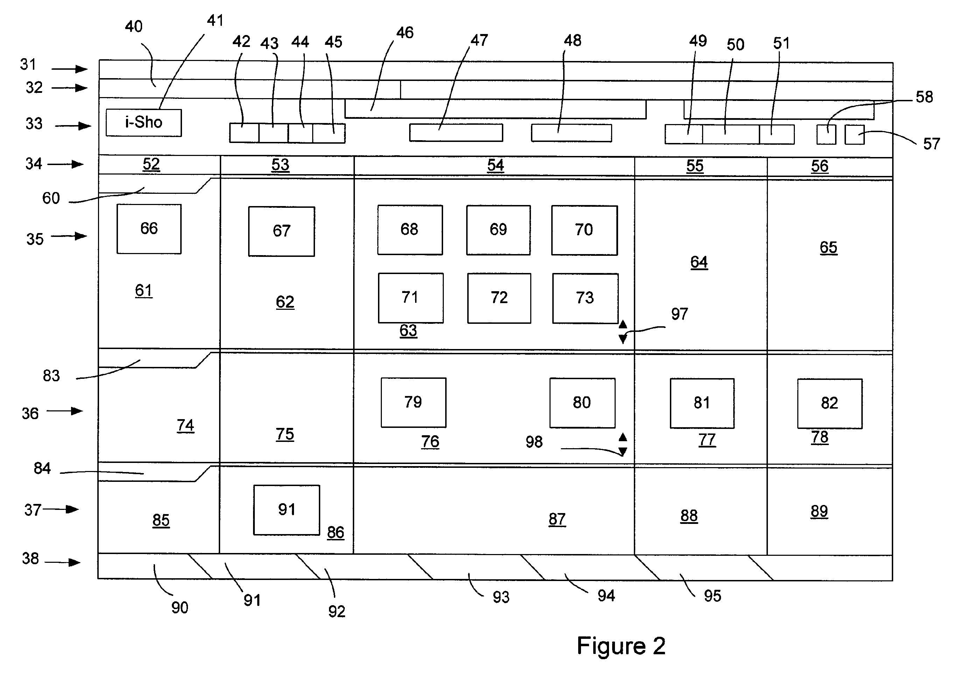

So as to enable appreciation of the significance of the invention, a screenshot 30 provided by the i-Sho client program will now be described with reference to Figure 2. Briefly, the screenshot 30 includes a window header 31, a standard toolbar 32, a function toolbar 33, a date bar 34, first to third channel rows 35 to 37 and an additional channel tab row 38, all arranged in sequence from the top to the bottom of the screenshot 30.

The standard toolbar 32 includes a number of top-level drop-down menu options 40. For instance, the top-level drop-down menu options may be 'File', 'Edit', 'View', 'Channels', 'Tag', 'Sho' And 'Help'. On clicking any of these top-level drop-down menu options 40, a number of menu options on a lower level relating to that menu option are displayed. This functionality is similar to that currently found on many PC applications, although many of the options in the menu are new. To the right on the screenshot 30 of the top-level drop-down menu options 40 of the standard tool bar 32 is a blank space.

In the functions tool bar 33 a number of options are present. A first object 41 is a graphic associated with the i-Sho client program, for instance including the words 'i-Sho'. Also included is a message centre 46. In the message centre 46 is displayed messages which indicate the task that is currently being performed by the i-Sho client program or, if no task is being performed, what the last performed task was.

Included in the functions toolbar 33 is the first to fourth time period setting objects 42 to 45. In this example, the first time period setting object 42 relates to a time period setting of a single day. The second time period setting object 43 relates to a period of a week. The third time period setting object 44 relates to a period of a month and the fourth time period setting object 45 relates to a period of a year. At any given time, one of the first to fourth time period setting objects 42 to 45 is highlighted, in particular by being illustrated as having been depressed, and the other three time period setting objects are not highlighted. A user can select an alternative time period setting object 42 to 45 by clicking that object. When a different time period setting object 42 to 45 is selected by a user, that object becomes highlighted and a previously highlighted object ceases to be highlighted. The time period setting identifies a duration of a time range in which content items are required to be grouped.

An icon size slider object 47 is located to the right of the time period setting objects 42 to 45 on the screen shot 30. The icon size slider object includes a slider which may be moved leftwards and rightwards, within left and right limits, by a user, in particular by dragging a slider using a mouse or other input device. The position of the slider in the icon size slider object determines the size of icons displayed in the channels, as is explained in more detail below.

To the right of the icon size slider object 47 is a navigation button object 48, which comprises five separate selectable buttons. One of the buttons when selected results in the display being set to the earliest possible time period. Another one of the buttons when selected results in the latest possible time period being displayed. Another button moves the display to the preceding time period. A further button moves the display to the succeeding time period. The final one of the buttons causes the display to have the central column relate to the current time period.

To the right of the navigation button object 48 are first to third time period display button objects 49 to 51. Only one of the first to third time period display button objects 49-51 is selectable at any time. The one of the time period display button time objects 49-51 is selected at a given time is highlighted, for instance by being indicated as being depressed. The first time period display button 49 causes the display of a single time period in the channels. Selection of the second time period display button object 50 results in a display of three time periods in the channels. The third time period display button object 51 when selected results in a display of five time periods for the channels. A user may select a different time period display button object by clicking a button on a mouse when the curser is shown is being as over that object.

The channel displays will now be described. In the example of the screenshot 30, the third time period display button object 51 is selected, resulting in five time periods being displayed for each of the channels 35 to 37. Furthermore, the first time period setting object 42 is selected, so each of the time periods relates to a period of a single day. Thus, the date bar 34 includes first to fifth channel time period fields 52 to 56. The third channel time channel period field 54 is the main field, and this is wider than the other fields. Displayed in the third channel time period field 54 is a date which is the display time period which is currently selected as being the main time channel period. In the second time channel period 53 is displayed the day which immediately precedes the day displayed in the third channel time period field 54. Similarly, the first channel time period field 52 displays a day which immediately precedes that displayed in the second time channel period field 53. Similarly, the fourth channel time period field 55 displays a day which immediately follows that displayed in the third channel time period field 54, and the fifth channel time period field 56 displays a day which immediately follows that displayed in the fourth channel time period field 55. If a different one of the time period setting objects 42 to 45 was selected, then the time period displayed in the first to fifth channel time period fields 52 to 56 would include a different date or date range.

In respect of the first channel row 35 are displayed contents relating to a first channel. A first channel name tab 60 displays the name of the first channel, for instance 'India'. The first channel includes a row of a current view matrix. The row comprised by the first channel includes a number of cells which is equal to the selected one of the time period display button objects 49 to 51, so in this example there are five cells in the row of the current view matrix. These cells are numbered as 61 to 65 in Figure 2. Displayed in the first channel row 35 are a number of icons which correspond to the first channel and the channel time periods shown in the first to fifth channel time period fields 52 to 56. In particular, the first channel first cell 61 includes a first icon 66. The first channel second cell 62 includes a second icon 67. The first channel third cell 63 is shown as displaying third to seven icons 68 to 73. The first channel fourth and fifth cells 64 and 65 do not display any icons.

The i-Sho client program displays icons in cells 61 to 65 according to the date on which the corresponding record was created. In particular, the third to seventh icons 68 to 73 each relate to records that were created on the day displayed in the third channel time period field 54. Similarly the second icon 67 relates to a record which was generated on the day displayed in the second channel time period field 53, and the first icon 66 relates to a record which was generated on the day displayed in the first channel time period field 52.

The second channel row 36 similarly includes first to fifth second channel cells 74 to 78. In this example, the first and second cells 74, 75 are empty of icons. The third cell 76 of the second channel row 36 includes eighth and ninth icons 79, 80. The fourth cell 77 of the second channel row 36 includes a tenth icon 81. Similarly, the fifth cell 78 of the second channel row 36 includes an eleventh icon 82. The name of the channel which is displayed in the second channel row 36 is indicated in the second channel name field 83. Similar to the first channel name field 60, the second channel name field 83 is displayed as a tab at the top of the first cell 74 in the channel.

The third channel is attached to the third channel row 37 and includes first to fifth cells 85 to 89. The third channel also includes a third channel identifier field 84 in which text identifying the channel name is displayed. In the third channel, a twelfth icon 91 is shown as being displayed in the second cell 86. The other cells 85, 87 to 89 are empty of icons.

Where the number of icons that relate to a given cell exceeds the number that can be displayed in that cell, considering the user-selected icon size and the i-Sho client program-selected cell size, the i-Sho client program displays a scroll item. Two such scroll icons are shown at 97 and 98 in the cells 63 and 76 respectively of Figure 2. Clicking on a relevant part of a scroll item 97, 98 results in the icons in the corresponding cell being scrolled through, so that other icons become visible. Instead of scroll arrows, a scroll bar may be provided in the relevant cells.

A user can access an item of content (e.g. file) relating to an icon simply by double-clicking that icon. When the i-Sho client program receives a double-click input when the cursor is located over an icon, the i-Sho client program opens the file from its original location and thus presents the content item to the user. The way in which the opening of the file is achieved may take any suitable form, and may involve starting the default program for accessing files of the same type as the file corresponding to the selected icon, and opening the file in that program.

In the additional channel tab row 38, a number of additional channel tabs 90 to 95 are shown Each of the additional tabs 90 to 95 has a channel name displayed in it. The channels associated with the additional tabs 90 to 95 can be included in the current view matrix by dragging the relevant additional tab to a suitable place in the screen. When a channel is added to the current view in this way and the number of channels in the current view matrix is equal to six, a channel from the current view is minimized and a suitable additional tab is displayed in the additional channel tab row 38. This limits the maximum number of channels to six.

Alternatively, the i-Sho client program may be arranged such that any number of channels can be included in the current view matrix. In this case, a user will need to remove one or more channels if the number of channels being displayed is too high. Removal of a channel from the current view matrix can be achieved by right-clicking the channel name tag of the channel and then selecting a 'minimize channel' option, or in any other way. For instance, the channel name tag may include a button which when selected minimizes the channel.

Briefly, the i-Sho client program comprises instructions for controlling the processor to maintain a database. The database includes plural records, each record corresponding to a particular item of content. Each record is associated with at least one channel, although a record can be associated with plural channels. Preferably each record relates only to a single channel. For content items that are associated with two or more channels, there is a separate record for that content item for each of the channels. This is advantageous since it allows different attachments to records for the same content item in different channels, and since it allows channels to be shared more easily, as will be understood from the below description. The association of items of content, and thus records, with channels is carried-out by a user, as is described below in more detail. Each channel has a user-allocated name.

Before channels can be presented in the current view matrix, a user first associates items of content with channels. This is achieved by the user selecting 'File' one of the top-level drop-down menu options 40 then 'Import' then 'File'. The i-Sho client program then opens an 'import file' window, through which the user can browse their files for the file of interest. On selecting a file, the i-Sho client program then opens an 'select channel' window, in which all of the current channels are listed with radio buttons and an 'OK' option, through which the user can associate the selected file with a desired channel. The i-Sho client program then associates the file with the channel. Following this association, an icon relating to the content item that is the file will be included at an appropriate part of the current view matrix that includes the channel and a time field which relates to the file creation date associated with that file.

The i-Sho client program also allows users to import all the files from a particular folder in one operation. This is achieved by the user selecting 'File' one of the top-level drop-down menu options 40 then 'Import' then 'Folder'. The i-Sho client program then opens an 'import folder' window, through which the user can browse their system for the folder of interest. On selecting a folder, the i-Sho client program then opens an 'select channel' window, in which all of the current channels are listed with radio buttons and an 'OK' option, through which the user can associate the selected folder with a desired channel. The i-Sho client program then associates all of the files in that folder with the channel. Depending on a setting of the i-Sho client program, the files in subfolders within the selected folder may or may not also be associated with the channel. Following association, an icon relating to each content item, the content items being respective ones of the files in that folder, is included at an appropriate part of the current view matrix that includes the channel and a time field which relates to the file creation date associated with that file.

This mechanism also allows content items (files) to be attached to plural channels. This is achieved simply by repeating the above-described process but selecting a different channel in the 'select channel' window. Thus, a user can associate for instance photographs stored in a folder with both "Family" and "Holiday India 2006" channels.

This allows users easily to access content without requiring users to remember file names and directories; instead, a user can simply go to the relevant channel and icons relating to all the content associated with that channel can then be viewed in a convenient manner. Moreover, this is achieved without any movement of files from their original location nor any modification of those files. Using i-Sho, users no longer need to devise complicated tree and branch filing systems nor need to master complicated file sharing and back-up techniques.

Specifically, when a file is added to a channel, the i-Sho client program generates a record relating to that file. The record comprises a displayable icon, a record date, a channel identifier, and a resource locator. Optionally, the record also includes a content item descriptor.

The record date may be the date of creation of the file, the date on which the file was last modified, the date a photograph was taken, or a custom date.

The channel identifier identifies which channel the record is associated with. If the file is associated with plural channels, the record includes a channel identifier for each of the channels. Each channel identifier identifies a channel with which the record is associated. The channel identifier can comprise any suitable string of alphanumeric characters, or any other suitable identifier. The channel identifier may be a name allocated to the channel by the user. If the channel identifier comprises something other than a user-allocated name, the i-Sho client program is provided with a table which relates channel names to corresponding channel identifiers.

The resource locator identifies a location at which the corresponding file or other item of digital content is stored. In the case of the item of content being a file, the location may be for example a filename and information identifying the location in a tree of folders at which a folder containing the file is located. This folder may be located on the PC 11 that the i-Sho client program is running on, or it may be located on some other device on a local area network (LAN) that the PC 11 is connected to. Alternatively, the resource locator may be a uniform resource locator (URL) indicating a content item accessible on a webserver to which the PC 11 has access through the Internet 15 or other network. In this case, the item of content may be a simple, downloadable file, or it may be streaming media. The URL may include an Internet Protocol (IP) address or a domain name which allows the webserver to be located. A file may be of any suitable type, for instance an image file, an audio file, a video file, a text document, etc.

The content item descriptor is a string of alphanumeric characters. It is useful in assisting a user identify what the corresponding content item relates to. The content item descriptor might be the filename of the content item, optionally without any filename extension which identifies the filetype. The content item descriptor may be amended by a user. This is particularly useful where the filename of an item of content is not particularly representative of the content, or where plural content items have the same or similar content item descriptors or filenames.

The displayable icon is a thumbnail image or other icon. A thumbnail image is a small image which is a low resolution representation of the content that it represents. A thumbnail image is typically between 15 and 150 pixels on each edge. Thus, the thumbnail for a digital photograph may be a small and lower resolution version, for instance 20 pixels square. In respect of a content item which is a video, a thumbnail image typically is a smaller and lower resolution version of the first frame of the video, although it is possible that a different frame, such as a title frame or other frame more representative of the content item, could be used instead. The displayable icon for text and other documents may be a thumbnail of the first page of the document, or may simply be an icon indicating the document type and the name of the file. In respect of a content item which is an audio content item, the thumbnail image may be an image of a musical note or similar graphic. In the case of the content item being a track from a published music album or single, the thumbnail image may be a small, low resolution version of the artwork of the cover of the published work. Such artwork can readily be obtained, for instance using Gracenote ® or similar services.

Since icon size is variable under user control, the thumbnail image generated by the i-Sho client program is the largest size which can be displayed. If smaller icons are required, the i-Sho client program produces a suitable thumbnail using the higher resolution thumbnail forming part of the record. This is convenient since it allows icon size to be varied whilst not requiring the record to contain plural thumbnail images for a given content item.

All records are stored in a file titled i-sho_Local.xml. This file is created when the i-Sho client program is run if the program detects that no such database pre-exists. This file acts as the database file on the client side, and thus can be termed the client database. Throughout multiple installations this file is not overwritten. The file is created in the local user's 'Local Settings\Application Data' folder and is not deleted.

The i-Sho client program sometimes needs to determine what to display in the current view matrix. This happens for instance when the i-Sho client program is started, when the time period setting is changed (through the selection of one of the time period setting objects 43-46 other than the current one), when a time period display button object is selected, or when one button of the navigation button objects is selected. This also happens when a channel is selected for viewing or is de-selected for viewing. The i-Sho program automatically selects a current view as follows. Firstly, the i-Sho program detects the current time period setting. The time period setting identifies a duration of a time range in which records are required to be grouped, and in this example may be a day, a week, a month or a year. However, the invention is applicable also to other time period settings On installation of the i-Sho client application program, a default time period setting is set. For instance, the default time period setting may be a month. The time period setting may be changed by a user during use of the i-Sho client application program. The i-Sho client application program is arranged to store data identifying the time period setting which was last selected by a user, and to use that setting as the default setting. Alternatively, the i-Sho client application program could return to the original default time period setting each time that the i-Sho client application program is run on the PC 11. The i-Sho client program then selects a number of adjacent time periods as display time periods, the number being equal to the time period display button object which is currently selected. Each time period has a duration equal to the duration identified by the time period setting. Thus, each of the adjacent time periods has the same duration. The duration may for instance be a day, a week, a month or a year, as mentioned above. The i-Sho program then determines what display channels are selected for viewing. These might be the default channels, the most recently displayed channels or a set of channels newly selected by a user. The display channels are channels for which digital content is required to be displayed. The i-Sho client program then combines the display time periods and said display channels to provide the current view matrix having plural cells, each cell comprising a different combination of display channel and display time period. Clearly, the number of cells is equal to the product of the number of display time periods and the number of display channels. In particular, as can be seen from Figure 2, the current view matrix has a structure like a table. Each row relates to a different channel, and each column relates to a different time period. The columns are arranged such that the oldest time period is at the left side of the matrix and the most recent time period is at the right side of the matrix. Where there is an odd number of columns, the central column preferably has a greater focus than the other columns. In the preferred embodiments, the number of display time periods is selectable to be five, in which case there are five columns and the third column, corresponding to the third of the five time periods, is wider than the other columns and thus has greater focus, or three, in which case there are three columns and the middle column, corresponding to the second of the three time periods, is wider than the other columns and thus has greater focus. The number of display periods also may be selectable to be one, in which case only one time period is included in the current view matrix.

Having determined the current view matrix, the i-Sho client program identifies records which relate to the current view matrix. This involves comparing the record date and said channel identifier included in each record to the dates and channels covered by the current view matrix. In detail, the i-Sho client program firstly analyses each of the records in turn and determines whether the record forms part of said current view matrix. This involves comparing the record creation date for the record with the selected time display periods. Records that have a creation date falling within one of the selected time display periods are identified by the i-Sho client program as being associated with that time display period. Records that have a creation date falling outside all of the selected time display periods are identified by the i-Sho client program as not being associated with any of the time display periods and, for the purpose of presenting part of the database contents, are ignored. For each of the records which are not ignored, the i-Sho client program compares the channel identifier for the record to the selected display channels. Records which have a channel identifier corresponding to one of the display channels are identified by the i-Sho client program as being associated with that channel. Records which have a channel identifier not corresponding to one of the display channels are identified by the i-Sho client program as not being associated with any of the display channels.

The above description of how the i-Sho client program determines which records are associated with the current view matrix is a simplified description of the process. It also is not the only way in which the process can be performed. Indeed, any other suitable process for determining which records are associated with the current view matrix could be used instead.

Although different cells of the current view matrix are provided with a visible border, this is not essential. In other embodiments, the cells can be displayed without separators, although thumbnails are displayed only in the appropriate cells.

For each record that forms part of the current view matrix, the i-Sho client program displays the thumbnail for that record in the relevant cell.. The relevant cell is the cell that relates to the one of the display channels that corresponds to the channel identifier associated with that record, and relates to the one of the display time periods that the record creation date for that record falls into. Thus, a displayable icon relating to a content icon is displayed by the i-Sho client program in a row for the channels that the record belongs to and in a column relating to a time period in which the content item was created. Moreover, items of content belonging to a given channel are arranged in the same row, and are grouped together according to their creation time.

For instance, thumbnails relating to items of content which a user has associated with a channel called "family outings" are displayed in a row specific to that channel. Moreover, the thumbnails are grouped according to their creation date. If the time period setting is one week, the thumbnails relating to a particular week are displayed in a first column, and thumbnails relating to the immediately following week are displayed in the column immediately to the right of the first column. With a current view matrix comprising five displayable time periods, thumbnails relating to five successive weeks are displayed, grouped according to the week of creation of the corresponding content items.

If the records also include a record descriptor, the i-Sho client application program displays the record descriptor along with, for instance immediately below, the relevant thumbnail .

Users can also select an option which limits the thumbnails displayed to those having specified file types, or to exclude certain file types. This gives users multiple ways in which to view and sort objects.

Another user-selectable option if for the i-Sho client program to display only the cells that contain data, so cells not containing objects automatically are skipped. Also provided is a 'Go To Date' option. When selected and a date (or period) is entered, the current view matrix automatically is based around that date or period.

The thumbnails are selectable by a user. Selection can occur for instance through the use of a mouse or other cursor control device and a selection input, e.g. double left click. Selection may occur instead by moving a marker between thumbnails, for instance using cursor keys or a 'tab' key of a keyboard, and using a selection key, for instance a 'return' or 'enter' key, when the required thumbnail is highlighted. In response to the selection of a thumbnail by a user, the i-Sho client program uses the record associated with the selected thumbnail to determine the resource locator associated with the selected thumbnail, and then retrieves the corresponding item of digital content by accessing it at the location identified by the resource locator. In the case of a content item stored on a LAN to which the PC 11 is connected or on a remote webserver, retrieving the item of content involves downloading the item of content from that location. Once the item of content has been downloaded, or if the item of content is stored locally, a suitable application program running on the PC and stored in the memory is used to view or otherwise render the content. What application program is used depends on what type the content item is, and maybe also user preferences. For instance, if the item of content is a video file, the application program used to access the content could be Windows Media Player, Real Player or any other suitable program. If the user has not specified a default application program for accessing content of the relevant type, the i-Sho client program or an external program may provide means for allowing the user to select one of plural application programs which could be used to access the item of content.

To obtain the i-Sho client program, users of the first and second PCs 11, 12 may download the software from a suitably configured website or other source. Upon installation the user will be required to complete a registration process, and the personal details obtained from this are stored on the services server 13. Once a user has completed the installation and registration and accepted the terms and conditions associated with use of the i-Sho client program, they are free to use the program.

A channel can be selected by a user, and the i-Sho client program then displays the channel in a selected state. This allows actions to be performed on the whole channel. Such actions include delete, in which all the records associated with the channel (but not the files themselves) are deleted. The action could instead be publish, which is described in more detail below. A channel is selected for instance by clicking the relevant channel name tab.

In addition to accessing content items by double-clicking the relevant thumbnail, as described above, thumbnails can be selected without being accessed by a single-click operation. On such selection, the i-Sho client program displays the thumbnail with a surrounding red box. This allows for certain actions to be taken on the content item. These actions include delete, cut, paste, copy, add hyperlink, re-date, rename, drag and drop, and tag.

The i-Sho client program includes a facility to back-up the user's data onto a remote storage system. The user's data is the content items, i.e. files, themselves as well as the database produced by the i-Sho client program.

In particular, the i-Sho client program is operable to communicate with the services server 13 via the Internet 16. On detecting that a user has selected file back-up, the i-Sho client program communicates with the services server program on the services server 13 to authenticate one another and the user. After determining that the user has the relevant privileges, the services server program co-operates with the i-Sho client program to transfer all the relevant data to the services server 13 for storage thereat or on a machine connected to it, for instance on a SAN (not shown). With subsequent data back-up, only newly added content items and records are uploaded to the services server 13. What content is new can easily be determined by comparing the records from the preceding back-up with the records currently present. By charging for this service, revenue can be provided to the operator of the services server 13.

The above description relates to so-called local channels. Local channels have a user defined title and the associated records and content items reside locally.

The i-Sho client program also can be used as a collaborative tool, allowing users to share content stored on their PC with other, specified users. In particular, a user may by selecting an option on the menus accessible through the standard toolbar 32 make specified channels available to other, specified users. For instance, a user of the first PC 11 may make their "Family" and "Holiday India 2006" channels available to a family member associated with the second PC 12. Such channels are termed 'server channels' or 'hub channels'. This is achieved by the publication of a channel which is a local channel on one computer, e.g. one of the PCs 11, 12.

Once a user has decided to publish a local channel as a hub channel, a number of events take place. In particular, a request is sent to the services server 13 to authenticate the user. Then the server database is configured and the content items (files) in the local channel are encrypted and compressed and uploaded to the services server 13, where they are stored. Meanwhile, the content items (files) are also stored in a local 'server cache' thus negating the need for the channel 'owner' to download their own objects from the services server 13. The local channel is then displayed as a 'hub channel'. The channel owner can also set permissions for their hub channel that dictates who can do what with it. Hub channels can be viewed by just the owner or by many users. A channel owner can choose who can view, add to, edit or erase data in a channel. They can also send an 'invite to view' thereby alerting friends and colleagues to the presence of a Hub channel. The invite to view is sent to the relevant users by the services server 13.

All metadata (i.e. the records) for each file is stored with each file on the services server 13. Metadata includes user defined searchable 'tags' and other file properties.

When a further user opens a hub channel all of the metadata, including the thumbnails, associated with the channel is downloaded to the user's PC 11, 12 within the same interface. At this stage, no content items are downloaded. Content items are downloaded when the further user performs an action associated with the object, such as dragging the file to a local channel or to a folder, or opening the file in an associated application. This allows users to see the icons very quickly yet only download the actual files on demand. For instance the further user may wish to view thumbnails for all the pictures her friend took at a wedding; however she may only want to download the pictures that include her and her family.

When the owner of a hub channel updates that channel, the updated channel is notified to the other users that have that hub channel on their PC. This can occur in one of two ways. The first involves the services server 13 sending notification to the users that have the hub channel. The second involves instead the i-Sho client program occasionally checking with the services server 13 for updates to hub channels. When an i-Sho client program determines that a hub channel has been updated with one or more new content items, thumbnails for those content items are displayed in the relevant channel. However, these thumbnails are displayed differently to the other thumbnails, for instance by being provided with a colored border or otherwise highlighted. Thus, users can easily identify new content items. New content items cease to be displayed differently when they are accessed by the user, or when an 'accept new content' option is selected by a user, which may occur in any suitable way.

Commercial channel sponsors can use i-Sho to deliver content to users. Such content is 'pulled' on demand by the user. This establishes a valuable platform for delivering free and paid for or subscribed content. i-Sho thus allows relationships to be established with content providers and the service provider to take a share of content download revenue.

For example, a channel attached to a sports team may have a number of different content items. An example is an icon which is a picture of a team member, which may be hyperlinked to a website page where the picture can be purchased. An icon being a picture of the sports team's manager speaking may be linked to video content that is either free or would need to be subscribed to. This may be downloaded as a file or streamed.

Commercial channels are provided as 'server channels'. A server channel is similar to a hub channel, although it is generally accessible in the sense that access is not restricted to users that are invited to access the channel. Access to server channels may be made subject to a payment, a subscription or registration, for instance. A server channel may include some content items which are freely accessible to all users and some content items which are available only to registered users, subscribers or users whom have made a certain payment.

Subscription channels may be subscribed to in return for content delivered daily. Such content may comprise video interviews, audio commentary, team photos, gossip from the dressing room etc. The channel then can be thought of as a daily content feed. The channel can display archived material relating to the sports team, all of which is accessible by navigating forwards and backwards in time. The channel can display future match fixtures, with appropriate content, such as maps, ground seating, ticket purchase, flights, hotels etc.

A tagging and indexed search functionality enables users easily to find information belonging to themselves or others.

To tag an item, a user merely selects a thumbnail by single-clicking item. This highlights the item. When an item is highlighted, a user can select a tag option. This can be achieved either by selecting a 'tag' object 58, which is located towards the right side of the function toolbar 33, or by right-clicking whilst the cursor is over the thumbnail and selecting a 'tag' option from a list of available options.

When the tag option is selected, the i-Sho client program displays a tag window over the screenshot 30. The tag window includes four main fields, entitled "Who", "Where", "What" and "Keywords". The user can enter words into these fields, and these words constitute tags. Words which have already been entered as tags on other content items are displayed and are able to be selected to be used as a tag for the current content item. This is convenient for users since it allows them to maintain consistency of tags between different content items without requiring them to remember the keywords used on other content items. Words entered into any of the "Who", "Where" and "What" fields automatically are included also in the "keywords" field. The "Who", "Where" and "What" fields are preferred fields for use by users since this gives improved searching possibilities, although the "keywords" field is suitable for use where such is not required by a user.

The i-Sho client program updates the corresponding record in the database with all the tags entered for a content item. Alternatively, the tags could be stored in a tag library.

After one or more tags have been associated with a content item, the tags are displayed whenever the cursor is hovered over the corresponding thumbnail.

At any time, a user can search for content items containing specified tags. A search is initiated by selecting a 'search' object 58, located adjacent the 'tag' object 57. The search covers all the channels that the user has access too. This includes channels which are not currently displayed, as well as server and hub channels. Alternatively, the user can request that the search be limited to local channels only, or to local and hub (but not server) channels. A search for a tag or a combination of tags produces a list of content items which have tags including the search term. The list includes the name (content descriptor) of the content item, the channel it is associated with and the creation date.

The window in which search results are displayed includes an option to create a channel from the search results. On selecting this option, the user is requested to name the channel, following which a channel is created by the i-Sho client program. The channel includes all the content items which were produced by the search. The records included in the database relating to the new channel are copies of the records from the channels that they originally were included in.

Additionally, content items which are subsequently added to the i-Sho client program and which have associated with them keywords such that they would have been provided as a result of the search are automatically added to the new channel by the i-Sho client program. This can be carried out either when a user requests that channels are refreshed, or may be carried out as part of a fully automatic update process performed by the i-Sho client program.

In the event that a user locates content they are interested in viewing on a channel which they do not have permission to view, the user can request to view the channel. This results in the sending of a message requesting the channel owner to reset the permission so as to allow the user to download the channel and view the content. The channel owner can set the permission states according to their preferences.

Owners of server channels can also set a channel state such that the channel will not appear in other users search results, thereby retaining anonymity for the channel and preventing requests to view.

Users can attach hyperlinks to content items. Such hyperlinks are delivered with the content item to the hub or server channels. The services server 13 can 'intercept' hyperlinks, so that the operator of the services server 13 can benefit commercially from hyperlinks attached by users to content items.

Commercial sponsors can use links to indexed tags stored at the services server 13 to display highly targeted results to users. The means to select a content items is delivered in a discrete but effective manner via the search results. Thus the 'tag' holidays may be linked to the website of a company that offers holidays for example.

When the owner of a server channel updates that channel, the updated channel is notified to other users that have that hub channel on their PC in a manner similar to that described above in relation to hub channels.

In alternative embodiments, the content items relating to shared channels does not need to be stored at the services server 13. In particular, with reference again to Figure 1, content may instead be served to users from the content server 14 under control of the content server program. The content server 14 is connected to the same LAN 17 as the third PC 15.

The i-Sho channel production program running on the third PC 15 is operable to produce channels in substantially the same manner as that described above in relation to the i-Sho client program. However, the channels produced using the i-Sho channel production program are intended for publication as server channels instead of solely for local use. The i-Sho channel production program allows content items to be imported into channels. The content items can be stored locally on the third PC 16, or can be introduced using portable memory, such as a CD- or DVD-ROM. The content items may alternatively be sourced over the Internet 15, although a copy of any such content item then is stored locally. The i-Sho channel production program is arranged such that once a channel has been completed, an operator is able to publish the channel as a server channel through an option provided by a user interface. At this time, the i-Sho channel production program arranges for the content items associated with the channel to be stored in the memory 24 of the content server 14, and produces a database of records for the channel. The database of records is substantially the same as that described above as being produced by the i-Sho client program. Each record includes a resource locator identifying the IP address of the content server 14 and a location on the content server 14 at which the corresponding content item is available. Thus, the resource locator may be in the form of a hyperlink. The database of records is communicated to the services server 13, from where it can be accessed by i-Sho users connected to the Internet 15.

Thus, i-Sho users may view the channel created by the i-Sho channel production program. When a user, for instance a user of the first PC 11, requests the access of one of the content items of the channel, the first PC 11 is directed to the content server 14 by virtue of the IP address forming part of the resource locator in the record associated with that content item, and to the location on the content server 14 where the content item is stored. Following any required authentication of the first PC 11, the content server 14 serves the content item to the i-Sho client program running on the first PC 11.

This is advantageous since the operator of the services server 13 does not need to make provision to store all the content items that are available through channels that it makes available.

The records stored at the services server 13 in respect of a server channel with content items stored at the content server 14 may be modified by the services server 13 such that hyperlinks are such selection of the hyperlink routes a user through the services server 13 to the content server 14, so that access to the content items can be monitored by the services server 13for the purposes of billing the owner of the server channel.

The i-Sho channel production program also allows an operator to update a channel with additional content items easily. Since the channel is available to users without the involvement of the third PC 16, the i-Sho channel production program can be used to modify a channel without the operation or availability of that channel being affected until the modified channel is published to the services server 13. Publication of the modified channel involves modification, rather than replacement, of the database held at the services server 13, which minimizes the amount of data transfer between the third PC 16 and the services server 13. This is achieved by suitable provision to the i-Sho channel production program and the services server program. Any new content items are provided to the content server 14 by the third PC 16.

Although in the above the content server 14 is connected to the same LAN 17 as the third PC 15, this is not essential. Instead, a PC supporting the i-Sho channel production program could be connected to the content server 14 by the Internet 15 or by another communication medium.

Similarly to the way that websites display advertising from Google Adsense and elsewhere, users and the i-Sho service provider can produce channels with links through to target companies' websites. This is termed AdSho. AdSho enables users to benefit from click-throughs generated by their own channels. The i-Sho service provider can establish a rewards system and benefit from the click-through revenue generated by users. The i-Sho rewards system can also be used to further drive viral distribution of the software.

AdSho is used when a user conducts a search using keywords. On a user requesting a search, the I-Sho client program consults the local database to determine what local and hub channels have content relevant to the keywords used in the search. The I-Sho client program produces a search results window, which overlays the screenshot 30 of Figure 2. The search results window includes four main areas. The first area is a search key area, in which search terms are displayed in an editable manner. The first area may contain text entry boxes, allowing users to search for keywords in 'who', 'where' and 'when' fields of the tags. The second to fourth areas list content items produced by the search. The second area relates to content items in local channels. The third area relates to content items in hub channels. The fourth area relates to AdSho. In the fourth area are displayed large selectable icons each relating to a different channel. These are sponsored, i.e. they are paid for, for instance by a business, either on a per display basis or on a click-through basis. On selecting an AdSho icon, a browser is opened and directed to a URL which relates to the sponsor of the icon. Alternatively, on selecting an AdSho icon, a sponsored channel is added to the current view. In a further alternative, each AdSho includes two components, one of which results in a browser being directed to a URL which relates to the sponsor of the icon and the other of which adds a sponsored channel the current view. This allows a user to select their preferred method for content delivery and browsing.

Content items which are published and which are subject to copyright may be protected from unauthorized copying by DRM software. Suitable DRM software is provided by Microsoft DRM and by SnoCap. Preferred DRM software includes a 'try before you buy' feature, allowing users to send a content item, for instance a music track, to another user. The other user is able to playback the track five times before it erases itself and at the same time provides means allowing the track to be purchased. This is attractive because it rewards users for generating and recommending content virally.

In further embodiments, the records produced by the i-Sho client program includes location information. The location information may be produced by a GPS receiver or similar associated with the device that produced the corresponding content item. For instance, a camera may be provided with a GPS receiver and may include as part of exif data within an image file which constitutes a photograph latitude and longitude co-ordinates. Other types of content item may have location information associated with them. Although this is particularly applicable to video and still images, it can be applied also to the location of receipt of emails, SMSs, instant messages and other content items.

Including location information in the database is advantageous because it allows searching also according to location. The i-Sho client program provides searching by a range of location co-ordinates. For instance, a user can search for content items generated at a particular location at a particular time, for instance within a given sports stadium on a certain day. This also allows content items to be displayed by the i-Sho client program in another view on a map, rather than organized by time.

Because of the technical architecture used in i-Sho, a considerable advantage is the opportunity to deliver detailed usage statistics. Usage statistics is anonymous information but, by combining data from user registrations with indexed search and server requests, usage trends can be monitored continually and reacted to accordingly. For instance, the frequencies and numbers of users of a certain demographic and living in a certain area search or download or tag using certain keywords. Uniquely, this is information related directly to a user's desktop content, and not merely hits on a website. This is advantageous since the user is much more likely to be a stakeholder in the content.

## Claims

1. A method of providing user access to digital content data, said method comprising:
maintaining a database having contents comprising plural records,
wherein each of said plural records is associated with at least one of a plurality of channels,
wherein each of said plural records relates to a different item of digital content, and
wherein each of said plural records comprises:
a displayable icon;
a record date;
at least one channel identifier, each said channel identifier identifying one of said plural channels with which said record is associated; and
a resource locator identifying a location at which said corresponding item of digital content is stored,
at computer apparatus, automatically selecting a current view by:
detecting a time period setting, said time period setting identifying a duration of a time range in which records are required to be grouped;
on said basis of said time period setting, selecting at least two adjacent time periods as display time periods, said display time periods each having a duration equal to said duration identified by said time period setting;
selecting as display channels at least two of said plural channels for which digital content is required to be displayed; and
combining said display time periods and said display channels to provide a current view matrix,
presenting said database contents by:
displaying said current view matrix with plural cells, each of said plural cells comprising a different combination of display channel and display time period, said number of cells being equal to the product of said number of display time periods and said number of display channels;
for each of plural ones of said records, using said record date and said channel identifier for said record to determine whether said record forms part of said current view matrix; and
for each record that forms part of said current view matrix, displaying said displayable icon for said record in said cell that:
a) relates to the one of said display channels that corresponds to said channel identifier associated with that record, and
b) relates to the one of said display time periods that the record date for that record falls into, and
in response to said selection of a displayable icon by a user, providing an item of digital content to the user by using said record associated with the selected displayable icon to determine the resource locator associated with the selected displayable icon and to retrieve said item of digital content.

2. A method as claimed in claim 1, wherein said displayable icon of at least one record is a thumbnail image.

3. A method as claimed in claim 1 or claim 1, comprising receiving plural records relating to a channel from an external source, and incorporating appropriate ones of those records in said current view matrix.

4. A method as claimed in claim 3, wherein said external source is a remote server.

5. A method as claimed in claim 3 or claim 4, comprising notifying a user of at least one update to said channel from said external source.

6. A method as claimed in any preceding claim, wherein said resource locator of at least one of said records is a hyperlink.

7. A method as claimed in any preceding claim, comprising:
conducting a search for content items meeting certain user-defined criteria to provide plural search results, wherein each result relates to a different content item; and
creating a new channel having a new channel identifier and having associated therewith records corresponding to the search results.

8. A method as claimed in any preceding claim, comprising making a publication channel available to one or more other users by sending records associated with said publication channel to a remote server for publication thereby.

9. A method as claimed in claim 8, further comprising identifying other users that are granted access to said publication channel.

10. Machine-readable instructions which when operated by computer apparatus control it to perform the method of any preceding claim.

11. Apparatus for providing user access to digital content data, said apparatus comprising:
a database having contents comprising plural records,
wherein each of said plural records is associated with at least one of a plurality of channels,
wherein each of said plural records relates to a different item of digital content, and
wherein each of said plural records comprises:
a displayable icon;
a record date;
at least one channel identifier, each said channel identifier identifying one of said plural channels with which said record is associated; and
a resource locator identifying a location at which said corresponding item of digital content is stored,
computer apparatus operable automatically to select a current view, the computer apparatus being:
arranged to detect a time period setting, said time period setting identifying a duration of a time range in which records are required to be grouped;
arranged to select at least two adjacent time periods as display time periods on said basis of said time period setting, said display time periods each having a duration equal to said duration identified by said time period setting;
arranged to select as display channels at least two of said plural channels for which digital content is required to be displayed; and
arranged to combine said display time periods and said display channels to provide a current view matrix,
said computer apparatus being operable to present said database contents by being:
arranged to display said current view matrix with plural cells, each of said plural cells comprising a different combination of display channel and display time period, said number of cells being equal to the product of said number of display time periods and said number of display channels;
arranged, for each of plural ones of said records, to use said record date and said channel identifier for said record to determine whether said record forms part of said current view matrix; and
arranged to display, for each record that forms part of said current view matrix, said displayable icon for said record in said cell that:
a) relates to the one of said display channels that corresponds to said channel identifier associated with that record, and
b) relates to the one of said display time periods that the record date for that record falls into, and
said computer apparatus being arranged to respond to said selection of a displayable icon by a user by providing an item of digital content to the user by using said record associated with the selected displayable icon to determine the resource locator associated with the selected displayable icon and to retrieve said item of digital content.
